# EUROPEAN PATENT SPECIFICATION

(11) **EP 3 229 397 B1**
(45) Date of publication and mention of the grant of the patent: **09.09.2020**
(21) Application number: 16164250.9
(22) Date of filing: 07.04.2016
(51) Int. Cl.: H04L 9/08, H04L 9/32

(54) **METHOD FOR FULFILLING A CRYPTOGRAPHIC REQUEST REQUIRING A VALUE OF A PRIVATE KEY**
VERFAHREN ZUR AUSFÜHRUNG EINER KRYPTOGRAFISCHEN ANFRAGE, DIE EINEN WERT EINES PRIVATEN SCHLÜSSELS ERFORDERT
PROCÉDÉ PERMETTANT DE SATISFAIRE UNE DEMANDE CRYPTOGRAPHIQUE NÉCESSITANT UNE VALEUR D'UNE CLÉ PRIVÉE

(43) Date of publication of application: 11.10.2017
(73) Proprietor: ContactOffice Group, 1170 Watermael-Boitsfort (BE)
(72) Inventor: Claes, Luc, 1300 Wavre (BE)
(74) Representative: Gevers Patents

(56) References cited:
- US-A1- 2010 185 862
- US-A1- 2015 207 783
- US-B1- 8 726 009
- HARRY HALPIN: "The W3C web cryptography API", WORLD WIDE WEB COMPANION, INTERNATIONAL WORLD WIDE WEB CONFERENCES STEERING COMMITTEE, REPUBLIC AND CANTON OF GENEVA SWITZERLAND, 7 April 2014 (2014-04-07), pages 959-964, XP058047541, DOI: 10.1145/2567948.2579224 ISBN: 978-1-4503-2745-9

## Description

### Field of the invention

According to a first aspect, the invention provides a method for fulfilling a cryptographic request requiring a value of a private key. According to a second aspect, the invention provides a system for fulfilling a cryptographic request requiring a value of a private key. According to a third aspect, the invention provides a set of code portions for fulfilling a cryptographic request requiring a value of a private key. According to a fourth aspect, the invention provides a generation process of a set of code portions for fulfilling a cryptographic request requiring a value of a private key.

### Background of the invention

In asymmetric key cryptographic methods, a pair of keys is attributed to each user: the value of the public key is disseminated widely, the value of the private key is known only by the user. For example, in data encryption, the value of the public key can be used by anybody to encrypt data, and because the value of the private key is required to decrypt the data, only the user can decrypt the information.

Another use of public and private keys is to generate a secured digital signature for a message. A known process to generate a secured digital signature for a message is the following. A sender determines a message footprint from the message using a method known by him and by a recipient. Subsequently, he encrypts the footprint with the value of the private key to generate a digital signature. The sender sends then the message and the digital signature to the recipient.

To check the authenticity of the message, (1) the recipient determines the footprint from the message using the same method as the sender did, and (2) he decrypts the digital signature using the value of the public key to generate an assumed footprint. If the assumed footprint determined from step (2) is equal to the footprint determined from step (1), it means that the sender used the right value of the private key and the authenticity of the message is confirmed.

A problem of both the decryption using the private key and the generation of digital signatures using the private key is that they typically require installation of a software. Therefore, it is not possible to perform them on any computing unit, like a public computer, or on any tablet or smartphone.

Another problem of both the decryption using the private key and the generation of digital signatures using the private key is that they typically require either the user to remember the value of the private key, which may comprise eighty digits, or the value of the private key to be stored locally, preventing the decryption or generation of digital signatures on a shared device and preventing the value of the private key to be shared on multiple devices.

US-A-2010/185862 discloses a method and system for data encryption of a JavaScript Serialized Object Notation (JSON) message. The system includes a sending entity, such as a Web browser with an encryptor application, and a receiving entity, such as a Web browser with an decryptor application that communicate with one another via Internet to exchange encrypted JSON messages. The encryptor may embed the encryption key within the JSON message itself (i.e. a Keylnfo element) or at the root of the JSON document tree in a list of EncryptedKeys. The encryptor, using the encryption key, generates a data object for at least one data item in the JSON message and replaces the data item with the data object providing a modified JSON message to the Web browser. The modified JSON message is sent to the receiving entity comprising the decryptor. The decryptor locates the corresponding key from the Keylnfo element or from a local datastore. Using the key, the decryptor decrypts the modified JSON message, i.e. the data object in the modified JSON message, to obtain the original the data item and replaces the data object in the modified JSON message with the data item to obtain the original JSON message.

United States Patent US 8,726,009 B1 and United States Patent Application Publication US 2015/207783 disclose the use of passwords to authenticate users in a browser-based message exchange application.

H. Halpin: "The W3C web cryptography API", DOI: 10.1145/2567948.2579224, provides a documentation of the cryptographic capabilities and primitives being standardized for web browsers in the context of Javascript environments.

### Summary of the invention

According to a first aspect, an object of the invention is to provide a method for fulfilling a cryptographic request requiring a value of a private key, compatible with any computing unit running a web browser, avoiding a user to remember the value of the private key and avoiding the value of the private key to be stored locally.

According to this first aspect, the invention provides a method for fulfilling a cryptographic request requiring a value of a private key, and comprising providing code portions to a computing unit running a web browser, the code portions being directly executable in the web browser to cause it to perform a cryptographic process including the steps of:
1) receiving, by the web browser, a cryptographic request requiring a value of a private key;
2) requesting, by the web browser, an encrypted value of the private key;
3) receiving, by the web browser, the encrypted value of the private key;
4) requesting, by the web browser, an unlocking entity;
5) receiving, by the web browser, the unlocking entity;
6) decrypting, by the web browser, the encrypted value of the private key with the unlocking entity to obtain the value of the private key; and
7) fulfilling, by the web browser, the cryptographic request using the obtained value of the private key;
wherein step 4) of the cryptographic process comprises sending, by the web browser, a request for an unlocking entity to a user through an output user interface of the computing unit running the web browser and step 5) of the cryptographic process comprises receiving, by the web browser, the unlocking entity from the user through an input user interface of the computing unit.

With the method according to the invention, code portions are provided to a computing unit running a web browser to cause it to perform a cryptographic process. The computing unit does not have to satisfy any other constraint than running a web browser. Especially, the computing unit does not have to store any software other than the web browser and the method does not install any software on the computing unit since all the steps of the cryptographic process are performed in the web browser upon execution of the provided code portions. The computing unit can therefore be a public computer in a cybercafé or borrowed from somebody else. The computing unit can be a computer, a tablet or a smartphone.

There is no specific requirement on the web browser. Most modern web browsers are able to perform the cryptographic process when the code portions are executed in them.

Therefore, the method for fulfilling a cryptographic request requiring a value of a private key is fully compatible with a web-based email platform that can be opened in a web browser.

In the method according to the invention, the value of the private key does not have to be remembered by the user since the encrypted value of the private key is received.

Moreover, the value of the private key is not stored unencrypted. There is therefore no risk involved concerning the private key integrity and confidentiality.

As used herein, the expression "receiving a cryptographic request" can mean "dealing with a cryptographic request" or "processing a cryptographic request".

As used herein, a "web browser" is a software application for retrieving, presenting, and traversing information resources on the World Wide Web. The web browser as used herein does not include any extension, applet or plug-in. If the web browser is extended by any extension, applet or plug-in, this extension, applet or plug-in is not considered as part of the web browser. Specifically, steps 1) to 7) are performed in the web browser itself and none of these steps is performed by any extension, applet or plug-in of the web browser, a Java applet or in a virtual machine like a Java Virtual Machine. The web browser can be any modern web browser running on a desktop, laptop, tablet, smartphone etc.

It is important for the invention that the code portions are executed directly in the web browser and not in any extension, applet or plug-in of the web browser. Using an extension, applet or plug-in would require installing the extension, applet or plug-in on the computing unit, which is currently not possible on tablet or smartphone and prohibited on public computers. Using an extension, applet or plug-in would also create a risk of security breach. Moreover, using an extension, applet or plug-in may create configuration issues or generate instabilities that would crash the computing unit.

Until recently, it was not possible to execute steps 1) to 7) directly in the web browser. The inventors have taken advantage of recent progress in programming language technologies to invent the cryptographic process according to the invention wherein steps 1) to 7) are directly executed in the web browser.

As used herein, a "private key" relates to an asymmetric key cryptographic method, wherein a pair of keys is attributed to each user: the value of a "public key" is disseminated widely and the value of the "private key" is known only by the user. As used herein, the expressions "the private key" and "the value of the private key" may be used one for another. The expression "a value of a private key" may be understood as "the value of a private key" since it is expected that a private key has only one value.

An advantage of the method according to the invention is that the fulfillment of the cryptographic request is performed on the computing unit. Therefore, confidential data generated by this fulfillment (for example decrypted data in case the fulfillment comprises a decryption and encrypted signature data in case the fulfillment comprises a generation of a digital signature) are not present in anywhere else than on the computing unit. Therefore, this sensitive data does not have to be transferred through a connection between devices, for example a server and the computing unit, wherein they could be read by a third party.

The encrypted value of the private key is the value of the private key in an encrypted form. The method that was used to encrypt the value of the private key can be, for example, a 256-bit AES (Advanced Encryption Standard) or a similar block cipher.

As used herein, « code portions » are executable software code portions in at least one programming language. Code portions preferably include scripts related to steps 1) to 7). As used herein, a « script » is a computing unit program automating the execution of tasks.

The provision of the code portions to the computing unit can be performed at once or in several phases. All or part of code portions related to the cryptographic process may also be provided together with other code portions, for example related to a web-based email platform.

In an embodiment of the invention, the cryptographic request is a request for decryption of encrypted data, and the method further comprises providing code portions to the computing unit to cause the web browser to perform a step, before step 7) of the cryptographic process, of receiving, by the web browser, encrypted data, and step 7) of the cryptographic process comprises decrypting, by the web browser, the encrypted data with the obtained value of the private key.

This makes possible to use the method according to the invention to decrypt encrypted data. The encrypted data may come from a server or from any other source of digital data, like a hard drive, or an Internet connection. Preferably, the encryption of the encrypted data is unrelated to the encryption of the value of the private key. For example, the encrypted data can be encrypted according to a first encryption method, which is an asymmetric key cryptographic method and the encrypted value of the private key can be encrypted according to a second encryption method, which may be, for example, a symmetric key cryptographic method.

In an embodiment of the invention, the cryptographic request is a request for generation of a digital signature, and the method further comprises providing code portions to the computing unit to cause the web browser to perform a step, before step 7) of the cryptographic process, of receiving, by the web browser, initial signature data, and step 7) of the cryptographic process (1) comprises encrypting, by the web browser, the initial signature data with the obtained value of the private key.

The initial signature data may be a footprint of a message to be signed with the digital signature, the footprint being created by a hashing of said message.

Preferably, the code portions comprise scripts in JavaScript language. More preferably, the code portions are scripts in JavaScript language.

Scripts in JavaScript language are particularly efficient for a direct execution in a web browser. Using JavaScript language for a complex sequence of steps like the cryptographic process is far from being obvious for the one skilled in the art. Indeed, such complex sequences of steps are known to be difficult to create in JavaScript because JavaScript is a very flexible programming language normally designed to perform basic functionalities and not complex sequences of steps.

Moreover, in JavaScript, many programming mistakes can only be detected at execution and not at compilation. Nevertheless, the inventors have succeeded in efficiently using the advantages of the JavaScript language for efficiently implementing the cryptographic process in a web browser. More specifically, the inventors propose to use an industrial-strength high level language compiled into JavaScript: JavaScript is only used as a low-level language, similar to an assembly language..

In an embodiment of the invention, at least some steps of the cryptographic process are first written in Java language as Java code portions. The Java code portions are then compiled, for example by the Google Web Toolkit, in JavaScript to generate the code portions to be executed in the web browser. Many programming mistakes can then be detected during this compilation, i.e., before execution.

To provide an order of magnitude for the complexity of the coding, the code portions in JavaScript executed in the web browser may correspond to about 187 KLOC (187 000 lines of codes) in Java which are compiled into about 111 KLOC (111 000 lines of codes) in JavaScript.

In an embodiment of the invention, code portions for a web-based email platform are provided to the computing unit.

The cryptographic process is especially suitable to be performed in the framework of a web-based email platform.

Preferably, the code portions are provided to the computing unit by one or several download steps of the code portions to the computing unit through Internet.

In an embodiment of the invention, step 2) of the cryptographic process comprises sending, by the web browser, a request for an encrypted value of the private key to a server and step 3) of the cryptographic process comprises receiving, by the web browser, the encrypted value of the private key from the server.

As used herein, a « server» comprises means for digital information treatment and is configured for providing functionality for other devices. Steps described herein as performed by "a server" may actually be performed by a plurality of servers.

An advantage of the method according to the invention is that the value of the private key is not stored unencrypted in any server and not transmitted unencrypted to any server. There is therefore no risk of leak of the value of the private key.

In an embodiment of the invention, the unlocking entity is at least one of: a password and a passphrase. Such a password or passphrase can easily be remembered by a user.

A user can then easily provide the unlocking entity. An output user interface can for example be a display or speakers. An input user interface can for example be a touchscreen, a keyboard, a mouse, a card reader or a microphone.

Preferably, the cryptographic request is compliant with at least one of the following standards: OpenPGP and X.509.

The OpenPGP and X.509 standards are preferable because they are open, non-proprietary standards.

According to a second aspect, the invention provides a system for fulfilling a cryptographic request requiring a value of a private key, the system comprising at least one storage medium containing codes portions that can be downloaded to a computing unit able to run a web browser, the code portions being directly executable in the web browser to cause it to perform the cryptographic process as described above, the code portions comprising:
- first software code portions configured for receiving a cryptographic request requiring a value of a private key;
- second software code portions configured for requesting an encrypted value of the private key;
- third software code portions configured for receiving the encrypted value of the private key;
- fourth software code portions configured for requesting an unlocking entity;
- fifth software code portions configured for receiving the unlocking entity;
- sixth software code portions configured for decrypting the encrypted value of the private key with the unlocking entity to obtain the value of the private key; and
- seventh software code portions configured for fulfilling the cryptographic request using the obtained value of the private key.

In an embodiment of the invention, the system comprises a server connectable to the computing unit.

According to a third aspect, the invention provides a set of code portions for fulfilling a cryptographic request requiring a value of a private key, the codes portions being directly executable in a web browser to cause it to perform the cryptographic process as described above, the code portions comprising:
- first software code portions configured for receiving a cryptographic request requiring a value of a private key;
- second software code portions configured for requesting an encrypted value of the private key;
- third software code portions configured for receiving the encrypted value of the private key;
- fourth software code portions configured for requesting an unlocking entity;
- fifth software code portions configured for receiving the unlocking entity;
- sixth software code portions configured for decrypting the encrypted value of the private key with the unlocking entity to obtain the value of the private key; and
- seventh software code portions configured for fulfilling the cryptographic request using the obtained value of the private key.

Preferably, the code portions comprise scripts in JavaScript language.

More preferably, the code portions are scripts in JavaScript language.

According to a fourth aspect, the invention provides a generation process of the set of code portions and comprising the steps of:
- writing, in Java language, Java code portions corresponding to the steps of the cryptographic process as described above; and
- compiling said Java code portions into JavaScript language to generate said set of code portions.

Scripts in JavaScript language are by far the most efficient type of software for execution in a web browser without plug-in, extension or applet. However, they are difficult to create since JavaScript is a very flexible programming language designed to perform basic functionalities and not to perform complex sequences of steps like the cryptographic process. To solve this problem, in an embodiment of the invention, some of, or all, the steps of the cryptographic process are written in Java language and the Java code portions are compiled to generate the code portions in JavaScript language. JavaScript is then considered only as a low-level programming language and Java is used a high-level, industrial-grade, strongly typed programming language, programming language.

### Brief description of the figures

For a better understanding of the present invention, reference will now be made, by way of example, to the accompanying drawings in which:
- Figure 1 illustrates a configuration according to an embodiment of the invention;
- Figure 2 illustrates a flowchart including a method for fulfilling a cryptographic request requiring a value of a private key and a cryptographic process, in an embodiment of the invention;
- Figure 3 illustrates a flowchart of the cryptographic process as performed in the web browser in an embodiment of the invention;
- Figure 4 shows a flowchart of a first embodiment of the first use of the cryptographic process;
- Figure 5 shows a flowchart of an example of the first embodiment of the first use of the cryptographic process;
- Figure 6 shows a flowchart of a first embodiment of the second use of the cryptographic process; and
- Figure 7 shows a flowchart of a generation process of the code portions in an embodiment of the invention.

### Description of the invention

The present invention will be described with respect to particular embodiments and with reference to certain drawings but the invention is not limited thereto. The drawings described are only schematic and are nonlimiting. In the drawings, the size of some of the elements may be exaggerated and not drawn on scale for illustrative purposes.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Furthermore, the various embodiments, although referred to as "preferred" are to be construed as exemplary manners in which the invention may be implemented rather than as limiting the scope of the invention.

The term "comprising", used in the claims, should not be interpreted as being restricted to the elements or steps listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising A and B" should not be limited to devices consisting only of components A and B, rather with respect to the present invention, the only enumerated components of the device are A and B, and further the claim should be interpreted as including equivalents of those components.

On the figures, identical or analogous elements may be referred by a same number.

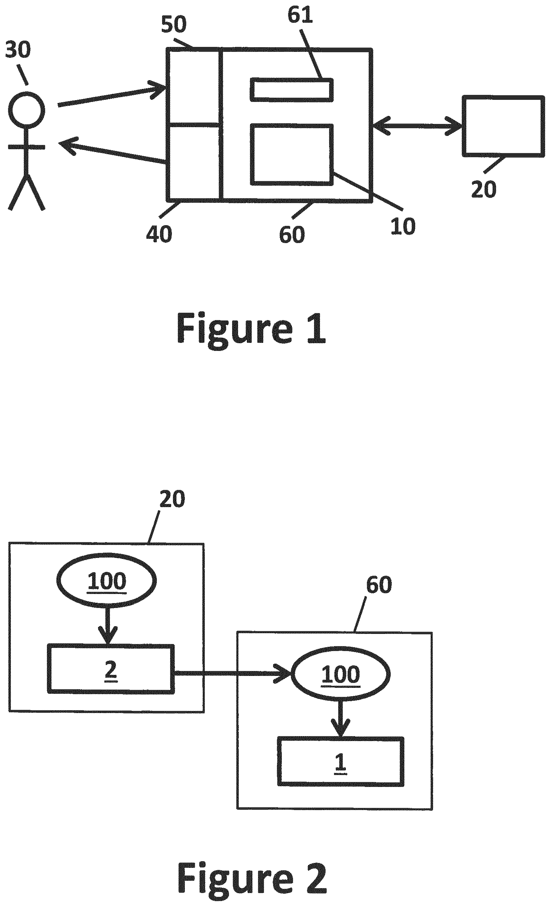

Figure 1 illustrates a configuration according to an embodiment of the invention. A user 30 uses a computing unit 60 having user input interfaces 50, user output interfaces 40, a memory 61 and means to run software. The computing unit 60 runs a web browser 10. The computing unit 60 is connectable, preferably through Internet, to a server 20.

The computing unit 60 can be a computer, a desktop, a laptop, a mobile phone or a tablet. The web browser 10 is able to execute the cryptographic process. The web browser 10 can, for example, be any of Firefox 38 and beyond (Mozilla, Mountain View, USA), Internet Explorer 10 and beyond (Microsoft, Redmond, USA), Google Chrome 38 and beyond (Google, Mountain View, USA) or Safari 8 and beyond (Apple, Cupertino, USA). The server 20 can be a computing unit, a plurality of computing units, can be in the cloud.

The connection between the computing unit 60 and the server 20 can be an Internet connection. It can be permanent or temporary. It can be wired and/or wireless.

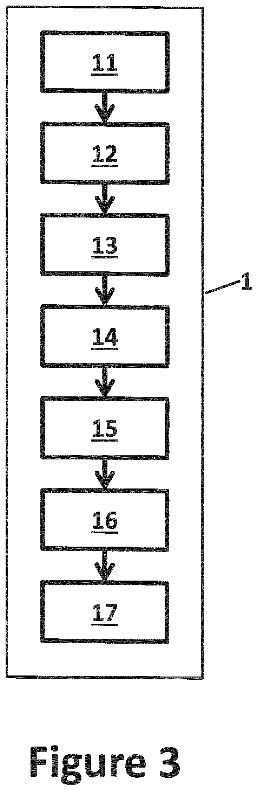

Figure 2 illustrates a flowchart including a method 2 for fulfilling a cryptographic request requiring a value of a private key and a cryptographic process 1, in an embodiment of the invention. The server 20 has, in its memory, code portions 100 directly executable in the web browser 10 to cause it to perform the cryptographic process 1. The server 20 provides 2, the code portions 100 to the computing unit 60. The provision 2 of the code portions 100 to the computing unit 20 can be performed in one phase or in several phases. For example, if the code portions 100 include a plurality of code portion divisions corresponding each to a step of the steps 11 to 17 of Figure 3, the provision 2 of the code portions 100 can be split into a plurality of provision phases, each provision phase corresponding one or more code portion divisions.

The provision 2 of the code portions 100 to the computing unit 20 can comprise one or several download steps of the code portions 100 to the computing unit 60 through Internet.

When the computing unit 60 receives the code portions 100, it is able to execute the code portions 100 in its web browser 10 to cause the web browser 10 to perform the cryptographic process 1. The cryptographic process 1 may be performed at any time following the reception by the computing unit 60 of the code portions 100.

The code portions 100 preferably comprise at least one of: scripts, scripts in JavaScript language and code portions in JavaScript language.

In an embodiment of the invention, the server 20 stores also an encrypted value of the private key related to the user.

Figure 3 illustrates a flowchart of the cryptographic process 1 as performed in the web browser 10 in an embodiment of the invention. The web browser 10 is able to automatically perform the steps of the cryptographic process 1 because of the code portions 100.

The web browser 10 receives 11 a cryptographic request requiring a value of a private key. The cryptographic request is preferably a request for decrypting encrypted data or a request for generating a digital signature. The cryptographic request can for example come from the user 20, through the user input interfaces 50.

The web browser 10 requests 12 the encrypted value of the private key, for example by sending a message to the server 20. The encrypted value of the private key is encrypted in such a way that its decryption requires an unlocking entity, known by the user 30. For example, the encryption of the private key may use AES 256-bits.

The web browser 10 receives 13 the encrypted value of the private key, for example in a message sent from the server 20.

The web browser 10 requests 14 the unlocking entity, for example, through the user output interfaces 40 of the computing unit 60.

The web browser 10 receives 15 the unlocking entity. The unlocking entity is preferably at least one of: a password and a passphrase. The unlocking entity can preferably be entered through the user input interfaces 50. The unlocking entity is preferably not stored in the server 20.

In an embodiment of the invention, the unlocking entity is stored in the computing unit 60. When the web browser 10 requests 14 the unlocking entity, its request goes to the computing unit 60 and when the web browser 10 receives 15 the unlocking entity, it receives it from the computing unit 60.

The web browser 10 decrypts the received encrypted value of the private key with the received unlocking entity in order to obtain the value of the private key. The obtained value of the private key can therefore be used by the web browser 10. The encrypted value of the private key might be stored in the computing unit 60, either in permanent way or in a temporary way, for example until the web browser 10 is closed.

The web browser 10 fulfills 17 the cryptographic request using the obtained value of the private key. The fulfillment 17 of the cryptographic request preferably uses any of the OpenPGP and X.509 technologies.

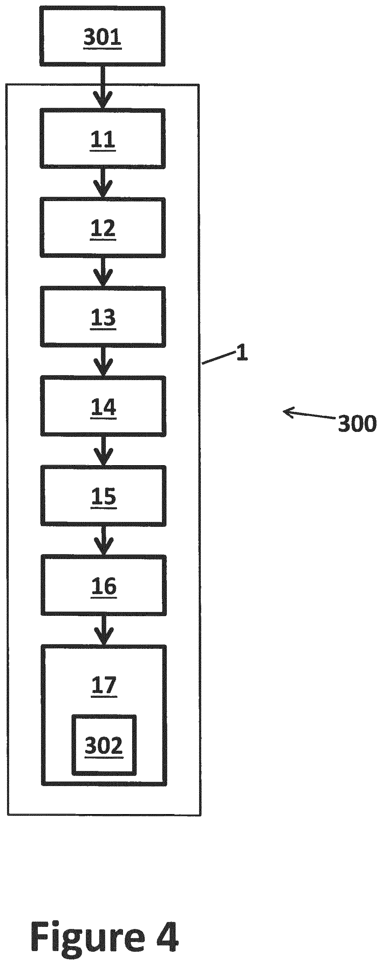

According to a first use of the cryptographic process 1, the cryptographic request is a request for decryption of encrypted data and the fulfillment 17 of the cryptographic request comprises the decryption of encrypted data with the obtained value of the private key. A first embodiment of this first use of the cryptographic process 1 is described below referring to Figure 4.

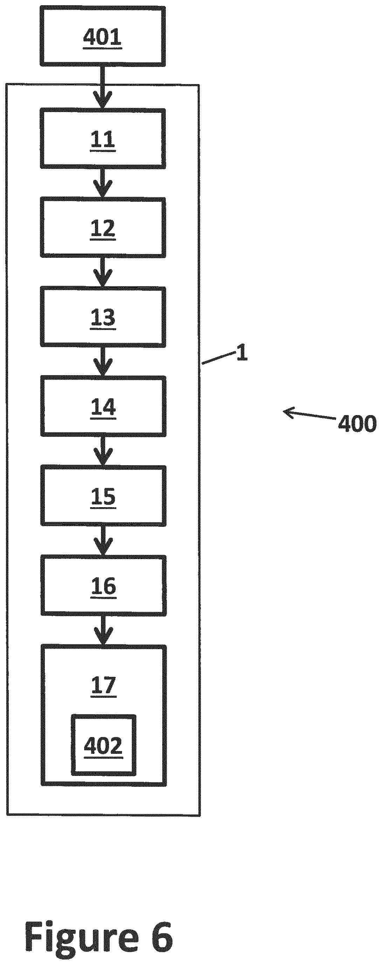

According to a second use of the cryptographic process 1, the cryptographic request is a request for generation of a digital signature and the fulfillment 17 of the cryptographic request comprises the encryption of initial signature data with the obtained value of the private key. A first example of this second use of the cryptographic process 1 is described below referring to Figure 6.

It is clear to the skilled person that some steps in the cryptographic process 1 could be swapped. For example, the step of requesting 14 the unlocking entity could happen before the step 12 of requesting the encrypted value of the private key or before the step 13 of receiving the encrypted value of the private key. Another example is that the step 13 of receiving the encrypted value of the private key could happen after the step of requesting 14 the unlocking entity or the step 15 of receiving the unlocking entity.

In an embodiment of the invention, if the value of the private key is already stored in the computing unit 60, for example because steps 12 to 16 have already been performed, steps 12 to 16 are skipped and step 17 is performed immediately after step 11.

Figure 4 shows a flowchart of a first embodiment 300 of the first use of the cryptographic process 1. The first use of the cryptographic process relates to the decryption of encrypted data. The web browser 10 receives 301 encrypted data, for example data of an encrypted email or data present in the memory 61 of the computing unit 60. The web browser 10 performs the cryptographic process 1 wherein the step 17 of fulfilling the cryptographic request using the obtained value of the private key comprises the decryption 302 of the received encrypted data to generate decrypted data, for example data of an email that can be read by the user 30. The decryption 302 of the encrypted data preferably uses an asymmetric key cryptographic method.

According to this first use of the cryptographic process 1, the server 20 preferably provides 2 to the computing unit 60 code portions 100 to cause the web browser 10 to perform the reception 301 of encrypted data and the decryption 302 of the received encrypted data.

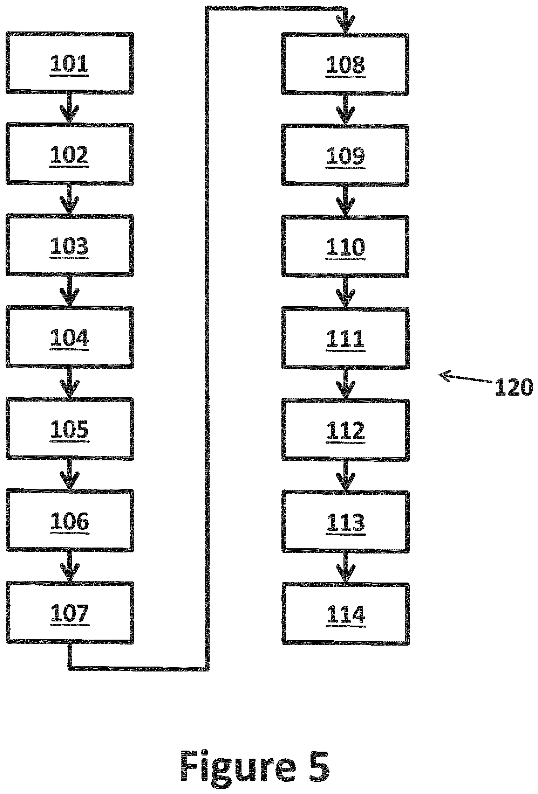

Figure 5 shows a flowchart of an example 120 of the first embodiment 300 of the first use of the cryptographic process 1.

The user 30 starts 101 a web-based email platform on the web browser 10 of his computing unit 60. The web browser 10 sends 102 a request for the web-based email platform to the server 20. The computing unit 60 receives 103 code portions 100 to cause the web browser to perform the cryptographic process 1, together with code portions for the web-based email platform. The code portions for web-based email platform include some data encrypted with an asymmetric key cryptographic method. The web-based email platform is displayed 104 on a display, which is part of the user output interfaces 40, indicating that some data, for example an email, is encrypted. The user 30 selects 105 encrypted data, for example an encrypted email. The web browser 10 asks 106 to the user 30 if the encrypted data should be decrypted. The user 107 agrees that the encrypted data should be decrypted, which is received as a cryptographic request requiring a value of a private key by the web browser 10. The web browser 10 automatically requests 108 the encrypted value of the private key to the server 20 and requests 109 the unlocking entity to the user 30. The web browser 10 receives 110 the encrypted value of the private key from the server 20 and receives 111 the unlocking entity from the user 30. The web browser 10 decrypts 112 the encrypted value of the private key with the unlocking entity to obtain it and then decrypts 113 the encrypted data with the obtained value of the private key. The web browser 10 then displays 114 the decrypted data to the user 30 using the user output interface 40.

Figure 6 shows a flowchart of a first embodiment 400 of the second use of the cryptographic process 1. The second use of the cryptographic process 1 relates to the generation of a digital signature, for example for a message.

The web browser 10 receives 401 initial signature data, for example a footprint of the message created by applying a hash function on the message. The web browser 10 performs the cryptographic process 1 wherein the step 17 of fulfilling the cryptographic request using the obtained value of the private key comprises the encryption 402 of the initial signature data to generate encrypted signature data. The encrypted signature data can then be sent, together with the message, to a recipient, who will be able to check the authenticity of the message, for example by (1) determining the footprint from the message by applying the hash function on the message and (2) decrypting the signature encrypted data using the value of the public key to generate an assumed footprint. If the assumed footprint determined from step (2) is equal to the footprint determined from step (1), the authenticity of the message is confirmed.

According to this second use of the cryptographic process 1, the server 20 preferably provides 2 to the computing unit 60 code portions 100 to cause the web browser 10 to perform the reception 401 of initial signature data and the encryption 402 of said initial signature data.

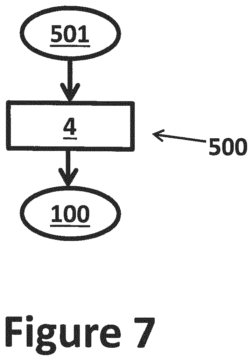

Figure 7 shows a flowchart of a generation process 500 of the code portions 100 in an embodiment of the invention.

In this embodiment, Java code portions 501 are written in Java language, for example by a programmer on a programming computing unit. The Java code portions 501 are compiled 4, for example using the Google Web Toolkit, to provide the code portions 100.

In other words, the invention relates to a method for fulfilling a cryptographic request requiring a value of a private key. Code portions 100 are sent 2 from a server 20 to a computing unit 60 running a web browser 10. The code portions 100 are executed directly in the web browser 10 in such a way that the web browser 10 automatically performs a cryptographic process 1 including the steps of:
- receiving 11 a cryptographic request requiring a value of a private key;
- requesting 12 an encrypted value of the private key;
- receiving 13 the encrypted value of the private key;
- requesting 14 an unlocking entity;
- receiving 15 the unlocking entity;
- decrypting 16 the encrypted value of the private key with the unlocking entity to obtain the value of the private key; and
- fulfilling 17 the cryptographic request using the obtained value of the private key.

The method preferably applies for decryption of encrypted data and generation of digital signatures.

Although the present invention has been described above with respect to particular embodiments, it will readily be appreciated that other embodiments are also possible.

## Claims

1. Method (2) for fulfilling a cryptographic request requiring a value of a private key, and comprising providing (2) code portions (100) to a computing unit (60) running a web browser (10), the code portions (100) being directly executable in the web browser (10) to cause it to perform a cryptographic process (1) including the steps of:
1) receiving (11), by the web browser (10), a cryptographic request requiring a value of a private key;
2) requesting (12), by the web browser (10), an encrypted value of the private key;
3) receiving (13), by the web browser (10), the encrypted value of the private key;
4) requesting (14), by the web browser (10), an unlocking entity;
5) receiving (15), by the web browser (10), the unlocking entity;
6) decrypting (16), by the web browser (10), the encrypted value of the private key with the unlocking entity to obtain the value of the private key; and
7) fulfilling (17), by the web browser (10), the cryptographic request using the obtained value of the private key;
wherein step 4) of the cryptographic process (1) comprises sending, by the web browser (10), a request (14) for an unlocking entity to a user (30) through an output user interface of the computing unit (60) running the web browser (10) and step 5) of the cryptographic process (1) comprises receiving (15), by the web browser (10), the unlocking entity from the user (30) through an input user interface of the computing unit (60).

2. Method for fulfilling a cryptographic request requiring a value of a private key according to claim 1, wherein the cryptographic request is a request for decryption of encrypted data, and further comprising providing code portions (100) to the computing unit (60) to cause the web browser (10) to perform a step, before step 7) of the cryptographic process (1), of receiving (301), by the web browser (10), encrypted data, and wherein step 7) of the cryptographic process (1) comprises decrypting (302), by the web browser (10), the encrypted data with the obtained value of the private key.

3. Method for fulfilling a cryptographic request requiring a value of a private key according to claim 1, wherein the cryptographic request is a request for generation of a digital signature, and further comprising providing code portions (100) to the computing unit (60) to cause the web browser (10) to perform a step, before step 7) of the cryptographic process (1), of receiving (401), by the web browser (10), initial signature data, and wherein step 7) of the cryptographic process (1) comprises encrypting (402), by the web browser (10), the initial signature data with the obtained value of the private key.

4. Method for fulfilling a cryptographic request requiring a value of a private key according to any of the preceding claims, wherein the code portions (100) comprise scripts in JavaScript language, wherein, preferably, the code portions (100) are scripts in JavaScript language.

5. Method for fulfilling a cryptographic request requiring a value of a private key according to any of the preceding claims, wherein the code portions (100) are provided to the computing unit (60) by one or several download steps of the code portions (100) to the computing unit (60) through Internet.

6. Method for fulfilling a cryptographic request requiring a value of a private key according to any of the preceding claims, wherein step 2) of the cryptographic process (1) comprises sending, by the web browser (10), a request (12) for an encrypted value of the private key to a server (20) and step 3) of the cryptographic process (1) comprises receiving (13), by the web browser (10), the encrypted value of the private key from the server (20).

7. Method for fulfilling a cryptographic request requiring a value of a private key according to any of the preceding claims, wherein the unlocking entity is at least one of: a password and a passphrase.

8. Method for fulfilling a cryptographic request requiring a value of a private key according to any of the preceding claims, wherein the cryptographic request is compliant with at least one of the following standards: OpenPGP and X.509.

9. System for fulfilling a cryptographic request requiring a value of a private key, the system comprising at least one storage medium containing codes portions (100) that can be downloaded to a computing unit (60) able to run a web browser (10), the code portions (100) being directly executable in the web browser (10) to cause it to perform the
method of any of the claims 1 to 8, the code portions (100) comprising:
• first software code portions configured for receiving (11) a cryptographic request requiring a value of a private key;
• second software code portions configured for requesting (12) an encrypted value of the private key;
• third software code portions configured for receiving (13) the encrypted value of the private key;
• fourth software code portions configured for requesting (14) an unlocking entity;
• fifth software code portions configured for receiving (15) the unlocking entity;
• sixth software code portions configured for decrypting (16) the encrypted value of the private key with the unlocking entity to obtain the value of the private key; and
• seventh software code portions configured for fulfilling (17) the cryptographic request using the obtained value of the private key.

10. System for fulfilling a cryptographic request requiring a value of a private key according to the preceding claim, comprising a server (20) connectable to the computing unit (60).

11. Set of code portions (100) for fulfilling a cryptographic request requiring a value of a private key, the codes portions (100) being directly executable in a web browser (10) to cause it to perform the method of any of the claims 1 to 8, the codes portions (100) comprising:
• first software code portions configured for receiving (11) a cryptographic request requiring a value of a private key;
• second software code portions configured for requesting (12) an encrypted value of the private key;
• third software code portions configured for receiving (13) the encrypted value of the private key;
• fourth software code portions configured for requesting (14) an unlocking entity;
• fifth software code portions configured for receiving (15) the unlocking entity;
• sixth software code portions configured for decrypting (16) the encrypted value of the private key with the unlocking entity to obtain the value of the private key; and
• seventh software code portions configured for fulfilling (17) the cryptographic request using the obtained value of the private key.

12. Set of code portions (100) according to the preceding claim, wherein the code portions (100) comprise scripts in JavaScript language.

13. Set of code portions (100) according to the preceding claim, wherein the code portions (100) are scripts in JavaScript language.

14. Generation process (500) of the set of code portions (100) according to the preceding claim and comprising the steps of:
• writing, in Java language, Java code portions (501) corresponding to the steps of the cryptographic process (1) of any of the claims 1 to 8; and
• compiling (4) said Java code portions (501) into JavaScript language to generate said set of code portions (100).

## Patentansprüche

1. Verfahren (2) zum Erfüllen einer kryptografischen Anfrage, die einen Wert eines privaten Schlüssels benötigt, und umfassend Bereitstellen (2) von Codeabschnitten (100) an eine Recheneinheit (60), die einen Webbrowser (10) betreibt, wobei die Codeabschnitte (100) direkt in dem Webbrowser (10) ausführbar sind, um ihn zu veranlassen, einen kryptografischen Prozess (1) durchzuführen, der die Schritte beinhaltet zum:
1) Empfangen (11), durch den Webbrowser (10), einer kryptografischen Anfrage, die einen Wert eines privaten Schlüssels benötigt;
2) Anfragen (12), durch den Webbrowser (10), eines verschlüsselten Werts des privaten Schlüssels;
3) Empfangen (13), durch den Webbrowser (10), des verschlüsselten Werts des privaten Schlüssels;
4) Anfragen (14), durch den Webbrowser (10), einer Entsperrentität;
5) Empfangen (15), durch den Webbrowser (10), der Entsperrentität;
6) Entschlüsseln (16), durch den Webbrowser (10), des verschlüsselten Werts des privaten Schlüssels mit der Entsperrentität, um den Wert des privaten Schlüssels zu erhalten; und
7) Erfüllen (17), durch den Webbrowser (10), der kryptografischen Anfrage unter Verwendung des erhaltenen Werts des privaten Schlüssels;
wobei Schritt 4) des kryptografischen Prozesses (1) Senden, durch den Webbrowser (10), einer Anfrage (14) für eine Entsperrentität an einen Anwender (30) durch eine Ausgangsanwenderschnittstelle der Recheneinheit (60), die den Webbrowser (10) betreibt, umfasst und Schritt 5) des kryptografischen Prozesses (1) Empfangen (15), durch den Webbrowser (10), der Entsperrentität von dem Anwender (30) durch eine Eingangsanwenderschnittstelle der Recheneinheit (60) umfasst.

2. Verfahren zum Erfüllen einer kryptografischen Anfrage, die einen Wert eines privaten Schlüssels benötigt, nach Anspruch 1, wobei die kryptografische Anfrage eine Anfrage zur Entschlüsselung von verschlüsselten Daten ist und weiter umfassend Bereitstellen von Codeabschnitten (100) an die Recheneinheit (60), um den Webbrowser (10) zu veranlassen, vor Schritt 7) des kryptografischen Prozesses (1) einen Schritt zum Empfangen (301), durch den Webbrowser (10), von verschlüsselten Daten durchzuführen, und wobei Schritt 7) des kryptografischen Prozesses (1) Entschlüsseln (302), durch den Webbrowser (10), der verschlüsselten Daten mit dem erhaltenen Wert des privaten Schlüssels umfasst.

3. Verfahren zum Erfüllen einer kryptografischen Anfrage, die einen Wert eines privaten Schlüssels benötigt, nach Anspruch 1, wobei die kryptografische Anfrage eine Anfrage zur Erzeugung einer digitalen Signatur ist und weiter umfassend Bereitstellen von Codeabschnitten (100) an die Recheneinheit (60), um den Webbrowser (10) zu veranlassen, vor Schritt 7) des kryptografischen Prozesses (1), einen Schritt zum Empfangen (401), durch den Webbrowser (10), von anfänglichen Signaturdaten durchzuführen, und wobei Schritt 7) des kryptografischen Prozesses (1) Verschlüsseln (402), durch den Webbrowser (10), der anfänglichen Signaturdaten mit dem erhaltenen Wert des privaten Schlüssels umfasst.

4. Verfahren zum Erfüllen einer kryptografischen Anfrage, die einen Wert eines privaten Schlüssels benötigt, nach einem der vorstehenden Ansprüche, wobei die Codeabschnitte (100) Skripte in JavaScript-Sprache umfassen, wobei bevorzugt die Codeabschnitte (100) Skripte in JavaScript-Sprache sind.

5. Verfahren zum Erfüllen einer kryptografischen Anfrage, die einen Wert eines privaten Schlüssels benötigt, nach einem der vorstehenden Ansprüche, wobei die Codeabschnitte (100) durch einen oder einige Herunterladeschritte der Codeabschnitte (100) zu der Recheneinheit (60) durch das Internet an die Recheneinheit (60) bereitgestellt sind.

6. Verfahren zum Erfüllen einer kryptografischen Anfrage, die einen Wert eines privaten Schlüssels benötigt, nach einem der vorstehenden Ansprüche, wobei Schritt 2) des kryptografischen Prozesses (1) Senden, durch den Webbrowser (10), einer Anfrage (12) für einen verschlüsselten Wert des privaten Schlüssels an einen Server (20) umfasst und Schritt 3) des kryptografischen Prozesses (1) Empfangen (13), durch den Webbrowser (10), des verschlüsselten Werts des privaten Schlüssels von dem Server (20) umfasst.

7. Verfahren zum Erfüllen einer kryptografischen Anfrage, die einen Wert eines privaten Schlüssels benötigt, nach einem der vorstehenden Ansprüche, wobei die Entsperrentität mindestens eines ist von: einem Passwort und einer Passphrase.

8. Verfahren zum Erfüllen einer kryptografischen Anfrage, die einen Wert eines privaten Schlüssels benötigt, nach einem der vorstehenden Ansprüche, wobei die kryptografische Anfrage mindestens einem der folgenden Standards entspricht: OpenPGP und X.509.

9. System zum Erfüllen einer kryptografischen Anfrage, die einen Wert eines privaten Schlüssels benötigt, wobei das System mindestens ein Speichermedium umfasst, das Codeabschnitte (100) enthält, die zu einer Recheneinheit (60) heruntergeladen werden können, die einen Webbrowser (10) betreiben kann, wobei die Codeabschnitte (100) direkt in dem Webbrowser (10) ausführbar sind, um ihn zu veranlassen, das Verfahren nach einem der Ansprüche 1 bis 8 durchzuführen, wobei die Codeabschnitte (100) umfassen:
• erste Softwarecodeabschnitte, die zum Empfangen (11) einer kryptografischen Anfrage konfiguriert sind, die einen Wert eines privaten Schlüssels benötigt;
• zweite Softwarecodeabschnitte, die zum Anfragen (12) eines verschlüsselten Werts des privaten Schlüssels konfiguriert sind;
• dritte Softwarecodeabschnitte, die zum Empfangen (13) des verschlüsselten Werts des privaten Schlüssels konfiguriert sind;
• vierte Softwarecodeabschnitte, die zum Anfragen (14) einer Entsperrentität konfiguriert sind;
• fünfte Softwarecodeabschnitte, die zum Empfangen (15) der Entsperrentität konfiguriert sind;
• sechste Softwarecodeabschnitte, die zum Entschlüsseln (16) des verschlüsselten Werts des privaten Schlüssels mit der Entsperrentität konfiguriert sind, um den Wert des privaten Schlüssels zu erhalten; und
• siebte Softwarecodeabschnitte, die zum Erfüllen (17) der kryptografischen Anfrage unter Verwendung des erhaltenen Werts des privaten Schlüssels konfiguriert sind.

10. System zum Erfüllen einer kryptografischen Anfrage, die einen Wert eines privaten Schlüssels benötigt, gemäß dem vorstehenden Anspruch, umfassend einen Server (20), der mit der Recheneinheit (60) verbunden werden kann.

11. Satz von Codeabschnitten (100) zum Erfüllen einer kryptografischen Anfrage, die einen Wert eines privaten Schlüssels benötigt, wobei die Codeabschnitte (100) direkt in einem Webbrowser (10) ausführbar sind, um ihn zu veranlassen, das Verfahren nach einem der Ansprüche 1 bis 8 durchzuführen, wobei die Codeabschnitte (100) umfassen:
• erste Softwarecodeabschnitte, die zum Empfangen (11) einer kryptografischen Anfrage konfiguriert sind, die einen Wert eines privaten Schlüssels benötigt;
• zweite Softwarecodeabschnitte, die zum Anfragen (12) eines verschlüsselten Werts des privaten Schlüssels konfiguriert sind;
• dritte Softwarecodeabschnitte, die zum Empfangen (13) des verschlüsselten Werts des privaten Schlüssels konfiguriert sind;
• vierte Softwarecodeabschnitte, die zum Anfragen (14) einer Entsperrentität konfiguriert sind;
• fünfte Softwarecodeabschnitte, die zum Empfangen (15) der Entsperrentität konfiguriert sind;
• sechste Softwarecodeabschnitte, die zum Entschlüsseln (16) des verschlüsselten Werts des privaten Schlüssels mit der Entsperrentität konfiguriert sind, um den Wert des privaten Schlüssels zu erhalten; und
• siebte Softwarecodeabschnitte, die zum Erfüllen (17) der kryptografischen Anfrage unter Verwendung des erhaltenen Werts des privaten Schlüssels konfiguriert sind.

12. Satz von Codeabschnitten (100) nach dem vorstehenden Anspruch, wobei die Codeabschnitte (100) Skripte in JavaScript-Sprache umfassen.

13. Satz von Codeabschnitten (100) nach dem vorstehenden Anspruch, wobei die Codeabschnitte (100) Skripte in JavaScript-Sprache sind.

14. Erzeugungsprozess (500) des Satzes von Codeabschnitten (100) nach dem vorstehenden Anspruch und umfassend die Schritte zum:
• Schreiben, in Java-Sprache, von Java-Codeabschnitten (501) entsprechend den Schritten des kryptografischen Prozesses (1) nach einem der Ansprüche 1 bis 8; und
• Kompilieren (4) der Java-Codeabschnitte (501) in JavaScript-Sprache, um den Satz von Codeabschnitten (100) zu erzeugen,

## Revendications

1. Procédé (2) d'accomplissement d'une requête cryptographique exigeant une valeur d'une clé privée, et comprenant la fourniture (2) de portions de code (100) à une unité informatique (60) exploitant un navigateur Web (10), les portions de code (100) étant directement exécutables dans le navigateur Web (10) pour l'amener à réaliser un processus cryptographique (1) incluant les étapes de :
1) la réception (11), par le navigateur Web (10), d'une requête cryptographique exigeant une valeur d'une clé privée ;
2) la demande (12), par le navigateur Web (10), d'une valeur chiffrée de la clé privée ;
3) la réception (13), par le navigateur Web (10), de la valeur chiffrée de la clé privée ;
4) la demande (14), par le navigateur Web (10), d'une entité de déverrouillage ;
5) la réception (15), par le navigateur Web (10), de l'entité de déverrouillage ;
6) le déchiffrement (16), par le navigateur Web (10), de la valeur chiffrée de la clé privée avec l'entité de déverrouillage pour obtenir la valeur de la clé privée ; et
7) l'accomplissement (17), par le navigateur Web (10), de la requête cryptographique en utilisant la valeur obtenue de la clé privée ;
dans lequel l'étape 4) du processus cryptographique (1) comprend l'envoi, par le navigateur Web (10), d'une requête (14) pour une entité de déverrouillage à un utilisateur (30) par l'intermédiaire d'une interface utilisateur de sortie de l'unité informatique (60) exploitant le navigateur Web (10) et l'étape 5) du processus cryptographique (1) comprend la réception (15), par le navigateur Web (10), de l'entité de déverrouillage depuis l'utilisateur (30) par l'intermédiaire d'une interface utilisateur d'entrée de l'unité informatique (60).

2. Procédé d'accomplissement d'une requête cryptographique exigeant une valeur d'une clé privée selon la revendication 1, dans lequel la requête cryptographique est une requête de déchiffrement de données chiffrées, et comprenant en outre la fourniture de portions de code (100) à l'unité informatique (60) pour amener le navigateur Web (10) à réaliser une étape, avant l'étape 7) du processus cryptographique (1), de la réception (301), par le navigateur Web (10), de données chiffrées, et dans lequel l'étape 7) du processus cryptographique (1) comprend le déchiffrement (302), par le navigateur Web (10), des données chiffrées avec la valeur obtenue de la clé privée.

3. Procédé d'accomplissement d'une requête cryptographique exigeant une valeur d'une clé privée selon la revendication 1, dans lequel la requête cryptographique est une requête de génération d'une signature numérique, et comprenant en outre la fourniture de portions de code (100) à l'unité informatique (60) pour amener le navigateur Web (10) à réaliser une étape, avant l'étape 7) du processus cryptographique (1), de la réception (401), par le navigateur Web (10), de données de signature initiales, et dans lequel l'étape 7) du processus cryptographique (1) comprend le chiffrement (402), par le navigateur Web (10), des données de signature initiales avec la valeur obtenue de la clé privée.

4. Procédé d'accomplissement d'une requête cryptographique exigeant une valeur d'une clé privée selon l'une quelconque des revendications précédentes, dans lequel les portions de code (100) comprennent des scripts en langage JavaScript, dans lequel, de préférence, les portions de code (100) sont des scripts en langage JavaScript.

5. Procédé d'accomplissement d'une requête cryptographique exigeant une valeur d'une clé privée selon l'une quelconque des revendications précédentes, dans lequel les portions de code (100) sont fournies à l'unité informatique (60) par une ou plusieurs étapes de téléchargement des portions de code (100) à l'unité informatique (60) par l'intermédiaire d'Internet.

6. Procédé d'accomplissement d'une requête cryptographique exigeant une valeur d'une clé privée selon l'une quelconque des revendications précédentes, dans lequel l'étape 2) du processus cryptographique (1) comprend l'envoi, par le navigateur Web (10), d'une requête (12) pour une valeur chiffrée de la clé privée à un serveur (20) et l'étape 3) du processus cryptographique (1) comprend la réception (13), par le navigateur Web (10), de la valeur chiffrée de la clé privée depuis le serveur (20).

7. Procédé d'accomplissement d'une requête cryptographique exigeant une valeur d'une clé privée selon l'une quelconque des revendications précédentes, dans lequel l'entité de déverrouillage est au moins l'un de : un mot de passe et une phrase secrète.

8. Procédé d'accomplissement d'une requête cryptographique exigeant une valeur d'une clé privée selon l'une quelconque des revendications précédentes, dans lequel la requête cryptographique est conforme à au moins l'une des normes suivantes : OpenPGP et X.509.

9. Système d'accomplissement d'une requête cryptographique exigeant une valeur d'une clé privée, le système comprenant au moins un support de stockage contenant des portions de code (100) qui peuvent être téléchargées sur une unité informatique (60) apte à exploiter un navigateur Web (10), les portions de code (100) étant directement exécutables dans le navigateur Web (10) pour l'amener à réaliser le procédé selon l'une quelconque des revendications 1 à 8, les portions de code (100) comprenant :
• des premières portions de code logiciel configurées pour la réception (11) d'une requête cryptographique exigeant une valeur d'une clé privée ;
• des deuxièmes portions de code logiciel configurées pour la demande (12) d'une valeur chiffrée de la clé privée ;
• des troisièmes portions de code logiciel configurées pour la réception (13) de la valeur chiffrée de la clé privée ;
• des quatrièmes portions de code logiciel configurées pour la demande (14) d'une entité de déverrouillage ;
• des cinquièmes portions de code logiciel configurées pour la réception (15) de l'entité de déverrouillage ;
• des sixièmes portions de code logiciel configurées pour le déchiffrement (16) de la valeur chiffrée de la clé privée avec l'entité de déverrouillage pour obtenir la valeur de la clé privée ; et
• des septièmes portions de code logiciel configurées pour l'accomplissement (17) de la requête cryptographique en utilisant la valeur obtenue de la clé privée.

10. Système d'accomplissement d'une requête cryptographique exigeant une valeur d'une clé privée selon la revendication précédente, comprenant un serveur (20) pouvant être connecté à l'unité informatique (60).

11. Ensemble de portions de code (100) pour l'accomplissement d'une requête cryptographique exigeant une valeur d'une clé privée, les portions de code (100) étant directement exécutables dans un navigateur Web (10) pour l'amener à réaliser le procédé selon l'une quelconque des revendications 1 à 8, les portions de code (100) comprenant :
• des premières portions de code logiciel configurées pour la réception (11) d'une requête cryptographique exigeant une valeur d'une clé privée ;
• des deuxièmes portions de code logiciel configurées pour la demande (12) d'une valeur chiffrée de la clé privée ;
• des troisièmes portions de code logiciel configurées pour la réception (13) de la valeur chiffrée de la clé privée ;
• des quatrièmes portions de code logiciel configurées pour la demande (14) d'une entité de déverrouillage ;
• des cinquièmes portions de code logiciel configurées pour la réception (15) de l'entité de déverrouillage ;
• des sixièmes portions de code logiciel configurées pour le déchiffrement (16) de la valeur chiffrée de la clé privée avec l'entité de déverrouillage pour obtenir la valeur de la clé privée ; et
• des septièmes portions de code logiciel configurées pour l'accomplissement (17) de la requête cryptographique en utilisant la valeur obtenue de la clé privée.

12. Ensemble de portions de code (100) selon la revendication précédente, dans lequel les portions de code (100) comprennent des scripts en langage JavaScript.

13. Ensemble de portions de code (100) selon la revendication précédente, dans lequel les portions de code (100) sont des scripts en langage JavaScript.

14. Processus de génération (500) de l'ensemble de portions de code (100) selon la revendication précédente et comprenant les étapes de :
• l'écriture, en langage Java, de portions de code Java (501) correspondant aux étapes du processus cryptographique (1) selon l'une quelconque des revendications 1 à 8 ; et
• la compilation (4) desdites portions de code Java (501) en langage JavaScript pour générer ledit ensemble de portions de code (100).
